# EUROPEAN PATENT SPECIFICATION

(11) **EP 1 536 646 B1**
(45) Date of publication and mention of the grant of the patent: **10.11.2010**
(21) Application number: 03027156.3
(22) Date of filing: 26.11.2003
(51) Int. Cl.: H04N 7/24

(54) **Method for guaranteed delivery of multimedia content based on terminal capabilities**
Verfahren für garantierte Ablieferung von Multimediainhalten, basiert auf den Terminalfähigkeiten
Méthode pour une distribution garantie de contenu multimedia, basé sur les capacités de terminal

(43) Date of publication of application: 01.06.2005
(73) Proprietor: Packet Video Network Solutions, Inc., Plano, TX 75075 (US)
(72) Inventor: Kosiba, David, Jamul, CA 91935 (US); Sodagar, Iraj, San Diego, CA 92122 (US)
(74) Representative: Schmidt, Werner Karl

(56) References cited:
- EP-A- 1 187 485
- EP-A- 1 263 233
- US-A- 5 953 506

## Description

### BACKGROUND OF THE INVENTION

The present invention provides a method for transferring multimedia data from a server to a terminal via a guaranteed delivery mechanism. The method of the present invention may allow playback of a file before transfer of the file is complete, it may tailor the content of the transfer based on terminal characteristics, it may resume an interrupted transfer without re-sending previously transmitted data, and may allow for reconstruction of a file without knowledge of the original multimedia format of that file.

In particular, the present invention refers to a method for delivery of multimedia content from a server to a user device, wherein the multimedia content comprises a video track and an audio track, the method comprising the steps of:
- generating a request by the user device for multimedia content to be downloaded from an application, the request including information about capabilities of the user device;
- generating a response by the server containing location information for a download module where the request by the user device for multimedia content resides;
- initiating a download session with a download module wherein the download module delivers the requested multimedia content to the user device for playback as a local file in a form that matches the capabilities of the user device;
- transmitting non-sequential portions of the multi media content from the download module to the user device within a set of data;
- reconstructing the multimedia content by the user device by storing the transferred data in non-contiguous locations within the local file, and the user device begins playback prior to completion of the transfer of the multimedia content.

A method of the above-identified kind is known from US 5,953,506. In the prior art method the stream is composed of packets, where each packet contains data of one type.

In many multimedia applications, the bandwidth available to transfer content may not be enough such that high-quality (i.e. high bitrate) content can be streamed to a user device. In such situations, it may be desirable to use a reliable transfer mechanism (i.e. download) to transfer the content. However, it may also be desirable to begin playback of the content before the transfer is complete. In an embodiment of the present invention, reliable transfer of non-sequential chunks of a media file such that the user device may begin playback before the transfer is complete is provided. Because specific portions of the content may not be suitable for the client application, transferred content may be tailored for the capabilities of the specific client application.

In wireless applications, the possibility exists of losing the connection to the Internet (i.e. dropping a call). Thus, the ability to restart a media transfer session where a previous one had left off may be beneficial. It would be in particular beneficial to resume the transmission after an interruption without having to re-send previously transmitted data.

Generic file formats, such as MP4, require that non-sequential portions of the file are available to begin playback in the absence of the entire file. Existing widely used file transfer mechanisms (such as FTP, HTTP) perform a serial transfer of a file. The existing methods require that an entire MP4 file be transferred before playback begins. Thus, a need exists for a method for transferring non-sequential portions of a multimedia file from a server to a terminal where playback may begin prior to completion of the transfer of the entire file.

Generic file formats, such as MP4, may contain multiple media streams, some of which may not be appropriate for all devices. Existing widely used file transfer mechanisms (such as FTP, HTTP) perform transfer of the file without knowledge of the contents. Thus, existing methods do not provide a mechanism to transfer only the portions of the file that are useful to the terminal.

Existing data transfer techniques that allow for early playback (such as RTP streaming), even when adapted for guaranteed transport, require knowledge of the underlying multimedia file format to recreate the original file. However, it would be advantageous for the terminal device to be able to construct a valid multimedia file without knowledge of the original file format.

### SUMMARY OF THE INVENTION

The invention is described in independent method claim 1.

The present invention overcomes the deficiencies of known systems and methods by periodically communicating from the download module to the user device how much data has been downloaded in terms of playback time. For resuming the transmission after an interruption without re-sending previously transmitted data, the user device communicates to the download module the last time value received. The download module then determines the portions to be transmitted, utilizing a size and an offset information attached to each portion.

A further feature of the present invention is a mechanism for negotiation between the server and the terminal such that the terminal may receive a subset of media streams from the file based on capabilities of the terminal. The server may then selectively transfer portions of the original file, thus maximizing bandwidth utilization and minimizing storage requirements on the terminal device. When transferring only portions of the file, the server may adjust the content to ensure the reconstructed file is a valid multimedia file of the original file format. A still further feature of the present invention is to provide a method for the terminal device to construct a valid multimedia file with no knowledge of the original file format.

To this end, in an embodiment of the present invention, a method for guaranteed delivery of multimedia content to a user device is provided. The method has the steps of: generating a request by the user device for multimedia content to be downloaded from an application, the request including information about capabilities of the usher device; generating a response containing location information for a download module where the request by the user device for multimedia content resides; and initiating a download session with a download module wherein the download module delivers the requested multimédia content to the user device for playback as a local file in a form that matches the capabilities of the user device.

In an embodiment, the method has the further step of generating an HTTP GET request including a file ID, a track list and time values wherein the response includes size information of the content being downloaded and identification information related to the tracks available.

In an embodiment, the method has the further step of selecting only those tracks from the track list that are requested by the user device.

In an embodiment, the tracks selected include a video track and one of multiple audio tracks. The audio track selected may be based on a specific audio compression algorithm supported by the user device.

In an embodiment, the audio track selected is based on a specific foreign language requested by a user of the user device.

In an embodiment, the audio track selected represents different audio content preferred by a user of the user device.

In an embodiment, the method has the further step of determining a preference of the user device by the download module based on information related to the location of the user device.

In an embodiment, the preference of the user device is determined by the download module based on specific information provided by the user device.

In an embodiment, the preference of the user device is determined by the download module based on assumptions made by a server based on the previous use of a multimedia service by the user device.

In an embodiment, the preference of the user device is determined by the download module based on assumptions made by a server wherein the assumptions made by the server are based on a service plan of the user device.

The method according to the present invention may have a further step of restarting the download session at a location wherein the location is a point of disruption of the download session.

The method according to the present invention may have a further step of generating an HTTP GET request indicating an amount of time previously downloaded when the download session is restarted.

The requested multimedia content may be sent as a whole file in a single message. Alternatively, the requested multimedia content may be sent as portions of the file in multiple messages. The method according to the present invention may have a further step of sending the multimedia content in multiple messages wherein the generated response includes boundary information for the portion being sent and time information wherein the boundary information identifies a position of the portion within the whole file and further wherein the time information identifies available playback time of the media that has already been delivered.

The method according to the present invention may have a further step of downloading the content such that playback of the file at the user device begins prior to the user device receiving the entire contents of the file.

The method according to the present invention may have further steps of receiving the requested content in multiple messages from the download module wherein each message includes time information indicating an available playback time; reconstructing the file at the user device as each message is received; and monitoring by the client device an amount of playback time assembled.

The method according to the present invention may have a further step of initiating playback of the local file by the user device whenever the amount of playback time assembled is greater than zero.

The method according to the present invention may have a further step of automatically starting playback by the user device at a time when the multimedia content yet to be received is expected to arrive before the multimedia content is needed for playback.

The method according to the present invention may have a further step of monitoring a time played wherein the user device continues to playback the downloaded content as long as the time played is less than the playback time assembled.

The method according to the present invention may be used for the download and playback of content from a Video-On-Demand, VOD, application to a user device. The method has the steps of: requesting content to be downloaded; generating a file containing an address pointing to a download module for the requested content; initiating a download session with the download module using the address contained in the generated file; and downloading the requested content to the user device wherein the requested content is stored as a file for playback on the user device.

The method according to the present invention may have further steps of downloading the content in portions corresponding to blocks of time; and writing the portions into the file on the user device wherein the portions are time stamped such that the user device knows an amount of playback time assembled as each portion is written to the file.

The method according to the present invention may have a further step of initiating playback of the file by the user device prior to the file being completely downloaded.

The method according to the present invention may have a further step of initiating playback when the playback time assembled is greater than zero.

The method according to the present invention may have a further step of restarting the download if the download session is interrupted.

The method according to the present invention may have a further step of requesting a portion of content corresponding to a time when the download session was interrupted.

It is, therefore, an advantage of the present invention to provide a method for transferring multimedia data from a server to a terminal via a guaranteed delivery mechanism.

Another advantage of the present invention is to provide a method and system for beginning playback of the multimedia data before the transfer of multimedia data from a server to a terminal is complete.

Another advantage of the present invention is to provide a method to tailor the content of the transfer based on terminal characteristics.

Another advantage of the present invention is to provide a method for resuming an interrupted transfer without re-sending previously transmitted data.

Another advantage of the present invention is to provide a method for addressing the ability for the terminal to reconstruct the file on the user device without having knowledge of the original multimedia format.

Additional features and advantages of the present invention are described in, and will be apparent from, the detailed description of the presently preferred embodiments and from the drawings.

### BRIEF DESCRIPTION OF THE DRAWINGS

Figures 1a-1j illustrate reconstruction and playback of a file before transfer of the file is complete in an embodiment of the present invention.
Figures 2a-2g illustrate reconstruction of a file without knowledge of the original multimedia format in an embodiment of the present invention.
Figure 3 illustrates contents of an MP4 file before downloading and illustrates only those components that are needed for local playback based on capabilities of a client in an embodiment of the present invention.
Figure 4 illustrates top-level atom tags within an MP4 file content that may be used for parsing in an embodiments of the present invention.
Figure 5 illustrates a movie atom that may be parsed to locate an individual track in an embodiment of the present invention.
Figure 6 illustrates omitting a track from media data in an embodiment of the present invention.
Figure 7 illustrates entire media tracks that may be omitted when doing track selection when downloading to a user device and how to update the file such that it remains a valid MP4 file in an embodiment of the present invention.
Figure 8 illustrates the relationship between the meta-data, track and the associated location of the media data atom in the MP4 file in an embodiment of the present invention.
Figure 9 illustrates a process of substituting a skip atom for the media data atom of the omitted track in an embodiment of the present invention.
Figure 10 illustrates a reconstructed file based on downloaded transmitted data in an embodiment of the present invention.
Figure 11 illustrates contents of an original file, portions of the original file that will be downloaded to the user device, and a reconstructed file without any placeholders for skipped content in an embodiment of the present invention.
Figure 12 illustrates contents of an original file with to-be-skipped media data and the impact of skipping media data on the remaining meta-data in the file in an embodiment of the present invention.
Figure 13 illustrates contents of an original file with to-be-skipped media data in an embodiments of the present invention.
Figure 14 illustrates transmitting portions of the MP4 file that are necessary for playback and dropping retaining unnecessary components and the impact of skipping media data on the remaining metadata in the file.
Figure 15 illustrates omitting hint tracks within an MP4 file when transmitting MP4 content via download in an embodiment of the present invention.
Figure 16 illustrates a download header in an embodiment of the present invention.
Figure 17 illustrates a download packet in an embodiment of the present invention.

### DETAILED DESCRIPTION OF THE PRESENTLY PREFERRED EMBODIMENTS

The present invention provides a method and a system for transferring multimedia data from a server to a terminal via a guaranteed delivery mechanism. The present invention provides playback of a file before transfer of the file is complete, allows for reconstruction of a file without knowledge of the original multimedia format of that file, tailors the content of the transfer .based on terminal characteristics, and/or resumes an interrupted transfer without re-sending previously transmitted-data.

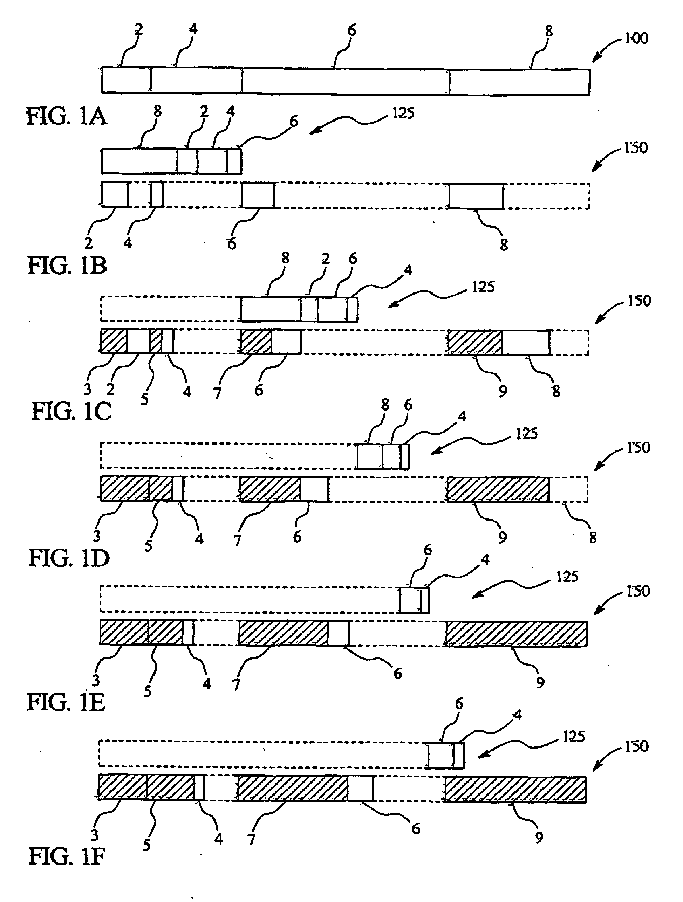

Referring now to the drawing wherein like numerals refer to like parts, Figures 1a-1g illustrate playback of a file before transfer of the file is complete. Figures 1a-1g illustrate downloading, for example, an MP4 file 100, and beginning playback while the download is still in progress. Figure 1a illustrates handling of various components of, for example, an MP4 file 100. The original MP4 file 100 may contain separate user data 2, audio data 4, video data 6, and meta-data 8.

Streamed data 125 is illustrated in Figure 1b. More specifically, pieces of data, namely, user data 2, audio data 4, video data 6, and meta-data 8, from each of the various components that may be sent to the user device during download are illustrated. Further, each of the component pieces, namely, user data 2, audio data 4, video data 6, and meta-data 8, are shown after the component pieces have been placed in their proper positions in a reconstructed file 150.

Streamed data 125 is again illustrated in Figure 1c. More specifically, the next set of data from each of the various components, user data 2, audio data 4, video data 6, and meta-data 8, that may be sent to the user device during download are illustrated. Figure 1c again shows each of the component pieces, namely, user data 2, audio data 4, video data 6, and meta-data 8 after the component pieces have been placed in their proper positions in the reconstructed file 150. The hatched pieces illustrated in Figure 1c, more specifically, received and reconstructed user data 3, received and reconstructed audio data 5, received and reconstructed video data 7, and received and reconstructed meta-data 9, indicate data that may have already been received and reconstructed from previous iterations.

Streamed data 125 is again illustrated in Figure 1d. More specifically, the next set of data from each of the various components, audio data 4, video data 6, and meta-data 8, that may be sent to the user device during download are illustrated. The various components do not include user data 2 as all of the user data 2 has been received by the user device. Figure 1d again shows each of the component pieces, received and reconstructed user data 3, audio data 4, received and reconstructed audio data 5, video data 6, received and reconstructed video data 7, meta-data 8, and received and reconstructed meta-data 9, after each of the component pieces have been placed in their proper positions in the reconstructed file 200. The hatched pieces indicate data that may have already been received and reconstructed from previous iterations (i.e. received and reconstructed user data 3, received and reconstructed audio data 5, received and reconstructed video data 7, and received and reconstructed meta-data 9). After the user device has received and reassembled all of the meta-data 8, playback may begin.

Streamed data 125 is again illustrated in Figures 1e. More specifically, the next set of data from each of the various components, audio data 4 and video data 6 that may be sent to the user device during download are illustrated. The various components do not include user data 2 or meta-data 8 as all of the user data 2 and meta-data 8 have been received by the user device. Figure 1e again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9.

Streamed data 125 is again illustrated in Figure 1f. More specifically, the next set of data from each of the various components, audio data 4 and video data 6 that may be sent to the user device during download are illustrated. The various components do not include user data 2 or meta-data 8 as all of the user data 2 and meta-data 8 have been received by the user device. Figure 1f again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9.

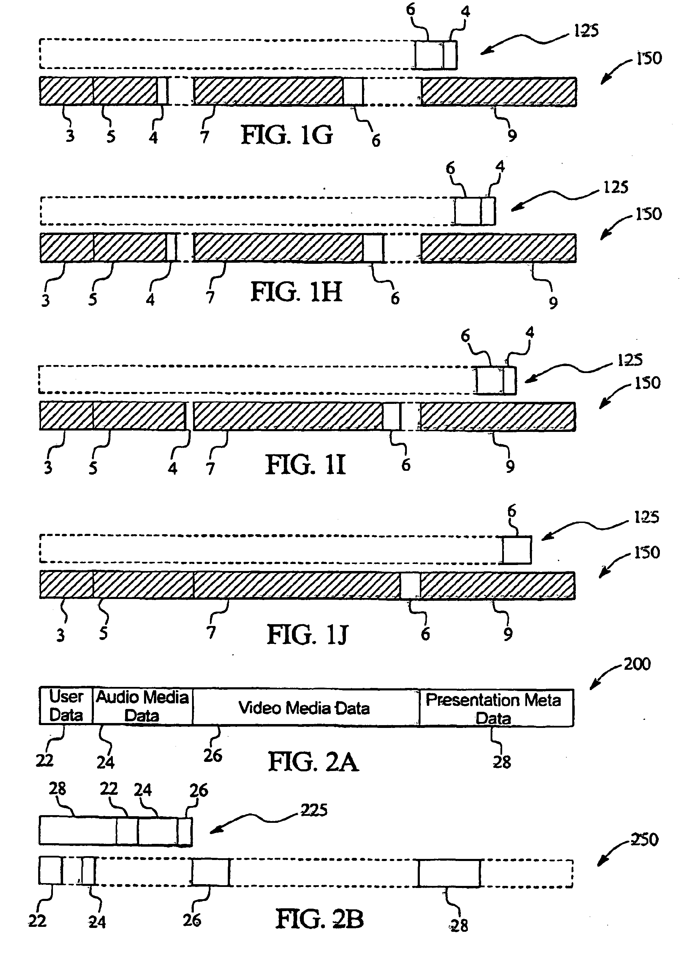

Streamed data 125 is again illustrated in Figure 1g. More specifically, the next set of data from each of the various components, audio data 4 and video data 6 that may be sent to the user device during download are illustrated. The various components do not include user data 2 or meta-data 8 as all of the user data 2 and meta-data 8 have been received by the user device. Figure 1g again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9.

Streamed data 125 is again illustrated in Figure 1h. More specifically, the next set of data from each of the various components, audio data 4 and video data 6 that may be sent to the user device during download are illustrate. The various components do not include user data 2 or meta-data 8 as all of the user data 2 and meta-data 8 have been received by the user device. Figure 1h again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9.

Streamed data 125 is again illustrated in Figure 1i. More specifically, the next set of data from each of the various components, audio data 4 and video data 6 that may be sent to the user device during download are illustrated. The various components do not include user data 2 or meta-data 8 as all of the user data 2 and meta-data 8 have been received by the user device. Figures 1i again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9. Figure 1i further illustrates that all of the audio data 6 has been received by the user device.

Streamed data 125 is again illustrated in Figure 1j. More specifically, the next set of data from each of the various components, video data 6 that may be sent to the user device during download are illustrated. The various components do not include user data 2, audio Data 4 or meta-data 8 as all of the user data 2, audio data 4 and meta-data 8 have been received by the user device. Figure 1j again shows each of the component pieces after they have been placed in their proper positions in the reconstructed file 150. The hatched pieces indicate data that has already been received and reconstructed from previous iterations, i.e. received and reconstructed user data 3, received and reconstructed audio data 5, received and reconstructed video data 7, and received and reconstructed meta-data 9. Figure 1j further illustrates that all of the video data 6 has been received by the user device, i.e. the download is complete.

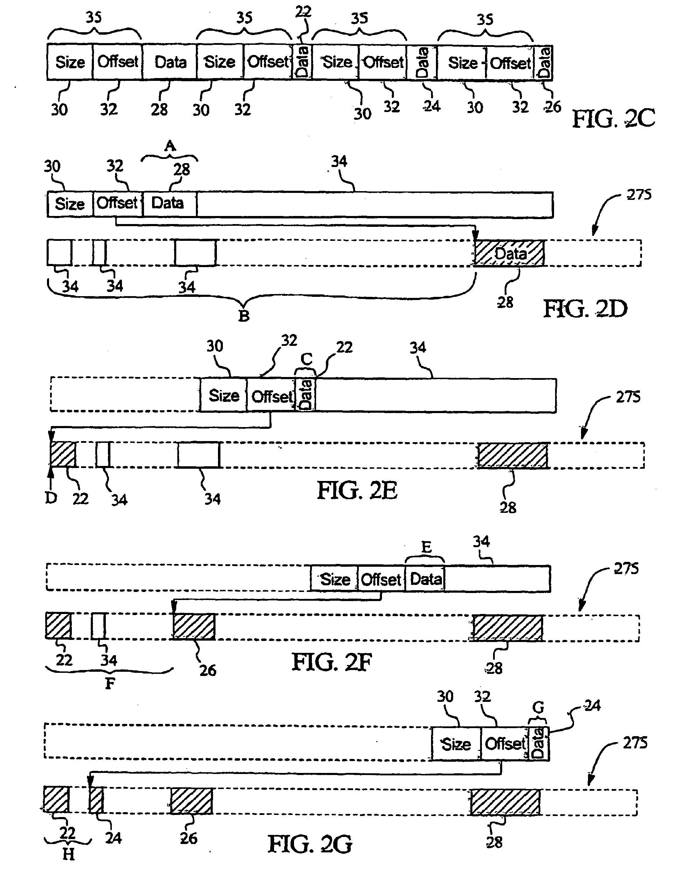

Referring now to Figures 2a-2g, reconstruction of a file may be allowed without knowledge of the original multimedia format of that file. Reconstruction of the file without knowledge of the original multimedia format by the user device may be accomplished by providing additional information that may be sent with, for example, a chunk of an MP4 file. Figures 2a-2g illustrates the process of downloading a set of chunks or portions of, for example, an MP4 file 200 including, one chunk from each of user-data 22, audio data 24, video media data 26, and meta-data 28 components. Each of the Figures 2c-2g show extra header information 35 that may be transmitted along with the actual data of the MP4 file 200 for the user device to reconstruct the file appropriately. The original MP4 file 200, shown in Figure 2a, may contain separate user data 22, audio data 24, video media data 26, and meta-data 28.

Streamed data 225 is illustrated in Figure 2b. More specifically, portions of data from each of the various components, user data 22, audio media data 24, video media data 26, and meta-data 28, that may be sent to the user device during download are illustrated. Figure 2b also illustrates each of the components pieces, user-data 22, audio media data 24, video media data 26, and meta-data 28, after the component pieces have been place in their proper positions in a reconstructed file 250.

Figure 2c illustrates the same portions of data shown in Figure 2a that may be from each of the various components, of an MP4 file 200. The components, user data 22, audio media data 24, video media data 2-6, and meta-data 28 may be sent to the user device during download. However, in Figures 2c, extra header information 35, such as, for example, size 30 and offset 32, may precede the actual file data, such as, for example, user data 22, audio media data 24, video media data 26, and meta-data 28. The extra header information 35, such as, for example, the size 30 and the offset 32, may be required to reassemble the file.

Figure 2d illustrates a portion of the meta-data 28 that may contain additional information, such as, for example, the size 30 and the offset 32. The user device may use this additional information to position the file data in its appropriate location in a to-be-reconstructed file 275. More specifically, the letter "A" may represent the size 30 of meta-data 28 as indicated by the size 30 preceding the meta-data 28 in Figure 2d. The letter "B", as shown in Figure 2d, may represent the offset 32 of the meta-data 28 in the to-be-reconstructed file 275 based on the offset 32 preceding the meta-data 28. Boxes 34 may indicates more data, that may be received from the other portions of the MP4 file 200.

Figure 2e illustrates a portion of the user data 22 that may also contain extra information including the size 30 and the offset 32. The user device may use this extra information to position the file data in its appropriate location in the to-be--reconstructed file 275. More specifically, the letter "C" may represent the size 30 of user data 22 as indicated by the size 30 preceding the user data 22 in Figure 2e. The letter "D", as shown in Figures 2e, may represent the offset 32 of the user data 22 in the to-be-reconstructed file 275 based on the offset 32 preceding the user data 22. The boxes 34 may indicate more data that may be received from the other portions of file. The meta-data 28 and the user data 22 illustrated in the hatched area of Figure 2e may indicate data that has already been reassembled into its proper location.

Figure 2f illustrates a portion of the video media data 26 that may also contain the size 30 and the offset 32. The user device may use this extra information to position the file data in its appropriate location in the to-be-reconstructed file 275. More specifically, the letter "E" may represent the size 30 of the video media data 26 as indicated by the size 30 preceding the video media data 26 in Figure 2f. The letter "F", as shown in Figure 2f, may represent the offset 32 of the video media data 26 in the to-be-reconstructed file 275 based on the offset 32 preceding the video media data 26. The boxes 34 may indicate more data that may be received from the other portions of file. The meta-data 28, the user data 22, and the video media data 26 illustrated in the hatched area of Figure 2f may indicate data that has already been reassembled into its proper location.

Figure 2g shows a portion of the audio media data 24 that may also contain additional header information 35, namely, the size 30 and the offset 32. The user device may use the additional header information 35 to position the file data in its appropriate location in the to-be-reconstructed file 275. More specifically, the letter "G" may represent the size 30 of audio media data 24 as indicated by the size 30 preceding the audio media data 24 in Figure 2g. The Letter "H", as shown in Figure 2g, may represent the offset 32 of the audio media data 24 in the to-be-reconstructed file 275 based on the offset 32 preceding the audio media data 24. The boxes 34 may indicate more data that may be deceived from the other portions of the MP4 file 200. The meta-data 28, the user data 22, audio media data 24 and the video media data 26 illustrated in the hatched area of Figure 2g may indicate data that has already been reassembled into its proper location.

The content of a file to be transferrer may be tailored based on the terminal characteristics of the user device. For local playback of, for example, an MP4 file content, a playback user device may not need certain components that may be present in an MP4 file. Therefore, when downloading MP4 files, only those portions of the MP4 file that are necessary for playback may be necessary to transmit. The remaining unnecessary components may be dropped, i.e. not transmitted. For example, a single MP4 file may contain audio data encoded by several different codecs (coder/decoder). However, the user device may only be able to decode with one of the codecs. Thus, only giving the user device what the user device can decode with one of the codecs may save transmission time and bandwidth, and storage space on the user device as well as making the content more relevant for the user.

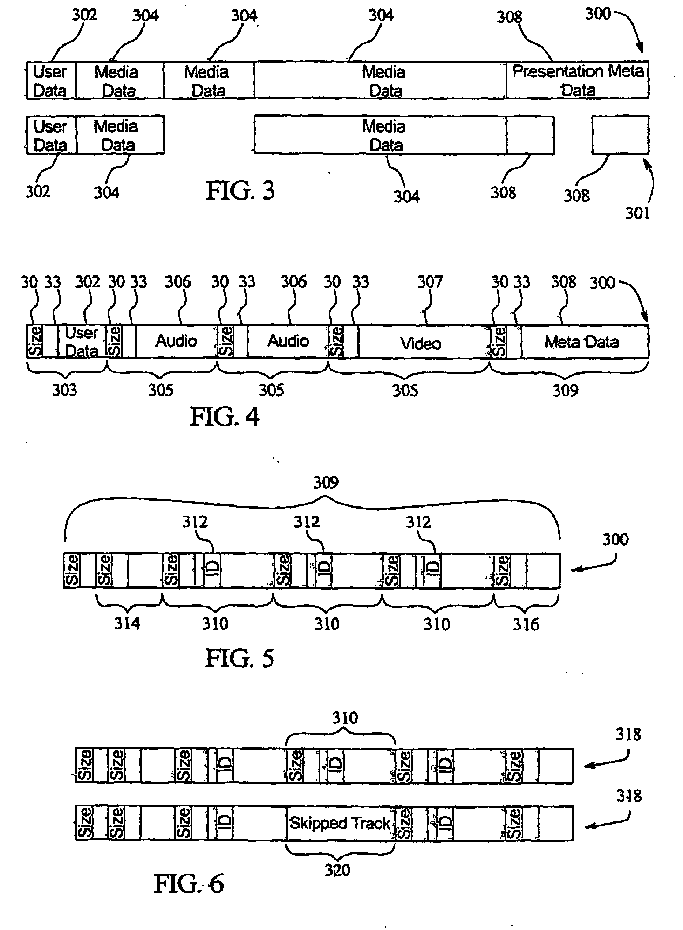

Referring now to Figure 3, the contents of an MP4 file 300 before downloading are illustrated. More specifically, user data 302, media data 304 and meta-data 308 are shown. Figure 3 further illustrates the transmitted data 301 with components of the user data 302, the media data 304 and the meta-data 308 that may be needed by the user device for local playback.

The following is a description of the details that may be involved to divide, for example, an MP4 file 300 and to transmit portions of the MP4 file 300. Dividing an MP4 file 300 and transmitting portions of the file may include parsing the file to identify top-level atoms, parsing the meta-data 308 to identify selected tracks, finding the media data 304 associated with the selected tracks, and modifying the meta-data 308 to reflect the skipped tracks.

Referring now to Figure 4, a top-level atom structure of an MP4 file 300 is illustrated. The server may parse the structure to locate the media data atoms 305 that may hold the actual media content, i.e. the size 300, the audio data 306, the atom tags 33 and/or video data 307. The movie atom 309 may store the meta-data 308 about the individual media samples.

Figure 4 shows the top-level atom tags 33 within the MP4 file 300 content that may be used for parsing. Three types of top-level atoms are shown in Figure 4, namely, the user data 303, media data atoms 305, and movie atom 309. Free Space atoms (not shown) may also be present at this level.

Referring now to Figure 5, after the top-level atom of the MP4 file 300 is parsed, the movie atom 309 may also be parsed to locate an individual track 310 of the atoms. Each track 310 may be uniquely identified by a track-ID 312. The track-ID 312 may also be part of the control URL (uniform resource locator). A one-to-one association between the SDP response and the track 310 of the actual media may exist. The three meta-data atom tags may be found within the movie atom 309 - namely a movie header 314, the track 310, and IOD atoms 316.

Referring now to Figure 6, when prepaying the meta-data 308 for transmission to the user device, the appropriate track 310 may be omitted. After the appropriate track 310 has been located as described above, a server may flag the track 310 so that the track 310 does not transmit to the user device during the download process.

Figure 6 illustrates original contents of the movie atom 318 including the audio track 310 that was selected to be skipped (i.e. not selected four transmission by the user device).

Figure 6 further illustrates the actual contents of the movie atom 318 (i.e. contents with skipped audio track 320) that may be transmitted to the user device during the download process.

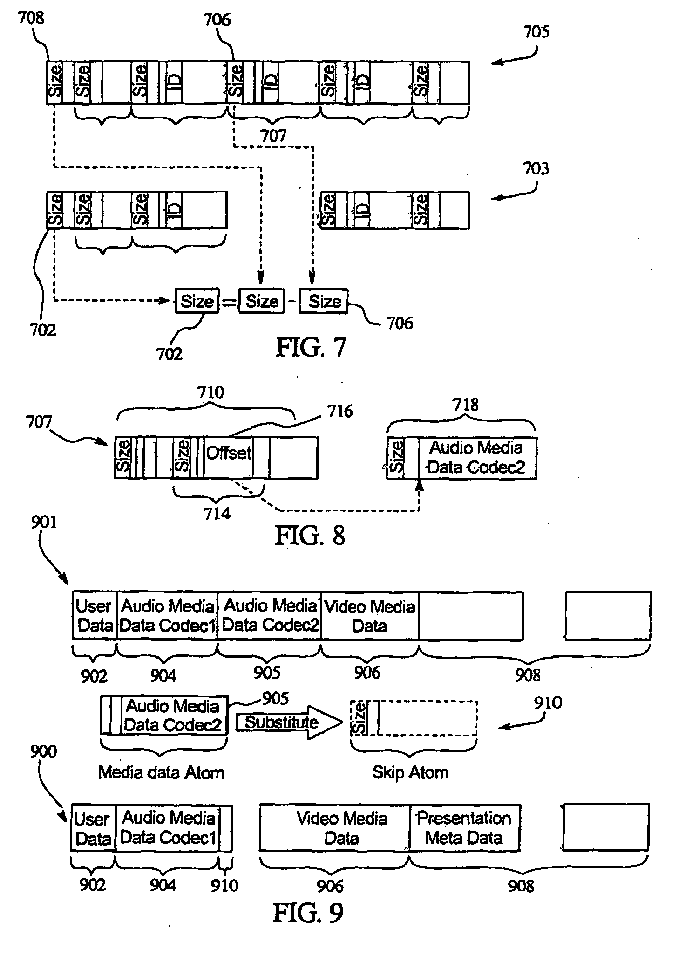

Referring now to Figure 7, when track selection is performed, entire media tracks may be omitted when downloading to the user device. When skipping a media track 707 during track selection, a size 702 of a containing movie atom 703 may be adjusted. The omission of a complete atom of the media track 707 may affect a size 702 of the resulting containing movie atom 703. Thus, the size 702 of the containing movie atom 703 may be adjusted as shown in Figure 7. Figure 7 shows how to modify the size 702 of the containing movie atom 703 based on a size 706 of the media track 707 after the media track 707 has been skipped. The size 702 of the containing movie atom 703 is the difference between the size 708 of the original containing movie atom 705 and the size 706 of the skipped media track 707. In this embodiment, the sizes of any other atoms within the containing movie atom 703 may not be affected.

Referring now to Figure 8, in addition to skipping the complete atom of the media track 707 within the meta-data, skipping associated media data may also be appropriate. For example, an association may be made between the track that was skipped and the appropriate media data atom. An association between the track that was skipped and the appropriate media data atom may be made by parsing the skipped atom of the media track 707 to find an offsets within the MP4 file where the associated media data may be stored (i.e. the media data atom).

The first step may locate a ChunkOffset atom 714 within the track atom 710 of the skipped media track 707 as shown in Figure 8. The track atom 710 may contain a table that may map logical sample groupings, called chunks, to physical file offsets. To find the offset in the file where the media data begins, an offset value 716 for the first chunk in the table may be found. The offset value 716 for the first chunk may be associated with the skipped media track 707 and the corresponding media data atom 718 as shown in Figure 8.

Figure 8 illustrates how to associate the skipped media track 707 with a specific Media Data Atom 718. The ChunkOffset atom 714 contained within every track may contain a mapping of a chunk number to the physical offsets within the file at which the chunk may be found. The beginning of the media data may be found by identifying an entry containing an offset for the first chunk.

Transmitting the contents of the truncated file, specifically in terms of the initial offsets of the media data atoms 718, in such a way that the overall structure of the file is maintained at the user device, may be necessary. Transmitting the contents of the truncated file may pose a problem when skipping media data. Thus, a placeholder may be inserted for the skipped atoms such that new media data atoms in the reconstructed file may still be located at the same starting offsets as the original file. More specifically, a header for a skip atom is created that has the same size as the original media data atom. The header for the skip atom may function as the placeholder for the media data and may provide alignment for the skipped content. The process of substituting a skip atom for the media data atom of the omitted track is illustrated in Figure 9.

Figure 9 shows the original content, user data 902, audio media data-coded 904, audio media data-codec2 905, video media data 906, and presentation meta-data 908 that may be transmitted to the user device. The presentation meta data, i.e. movie atom, is illustrated with the skipped track atom, removed. The media data associated to the skipped media track (audio media data-codec2 905) is shown in the original transmitted data 901 in Figure 9. The media data may be skipped for the second audio codec (audio media data-codec2 905) while still maintaining alignment in transmitted data 900.

Figure 9 further illustrates what may actually be transmitted in place of the audio media data-codec2 905. The header for a skip atom 910 may be created that has the same size as the size of the original media data atom (audio media data-codec2 905). The skip atom 910 having the same size as the audio media data-codec2 905 may provide the alignment placeholder for the skipped content. Actual content, namely, the user data 902, the audio media data-codec1 904, the skip atom 910, the video media data 906, and the presentation meta-data 908 that may be transmitted to the user device is shown in the transmitted data 900.

Figure 9 illustrates the transmitted data 900 after replacing the media data 905 with skip header 910.

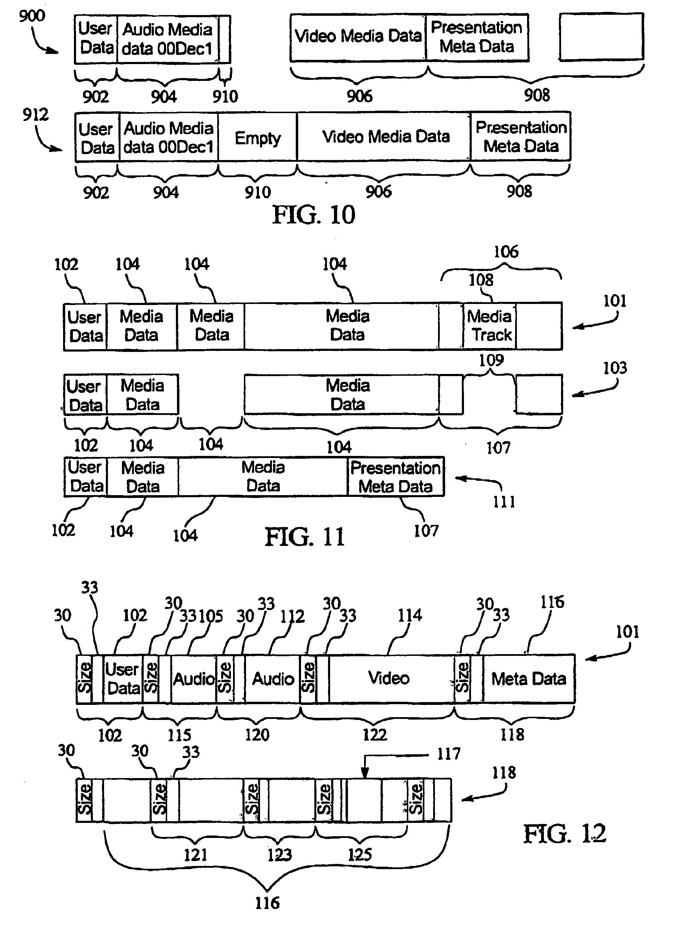

Downloading of a truncated MP4 file may be reconstructed to enable playback of the content. Figure 10 illustrates the structure of a reconstructed file 912 based on the transmitted data 900 that was downloaded. When the skip atom 910 is used in the reconstructed file 912, the skip atom 910 may be a placeholder for the original media .data atom (audio media data-codec2 905). Data that may be in the file after the skip atom header is undefined. Figure 10 illustrates the transmitted data 900, namely, user data 902, audio media data-codec 1 904, skip atom 910, video media data 906, and presentation meta-data 908 that may actually be transmitted. Those selected tracks may be transmitted with appropriate placeholders inverted for media alignment. Figure 10 further illustrate the reconstructed file 912 at the user device after download.

The skip atom 910 may be used as a placeholder for the skipped media content to keep actual media content aligned with original offsets in the file because of the specific table contents of the ChunkOffset Atom. The ChunkOffset Atom contains a table of offset values that indicate physical position within the file relative to the beginning of the file where each logical chunk of media data begins. Thus, if the actual media data is shifted in the file by dropping media content, an update of the entrie in this table by the amount of skipped data that preceded the media content for this track in the original file may be needed. Only those tables whose media content followed the skipped content in the original file may need updating. Figures 11-14 illustrate this situation.

Figure 11 illustrates the contents of the original file 101, more specifically, user data 102, media data 104, presentation meta-data 106 and media track 108 contained within the meta-data 106 Figure 11 also illustrates the portions 103 of the original file 101 that may be downloaded to the user device. A part 108 of the presentation meta-data 106 may be omitted as well as a complete chunk of media data 104. Figures 11 further illustrates the reconstructed file 111 without any placeholders for the skipped content, more specifically, user data 102, media data 104, presentation meta-data 107 now without media track 108. The reconstructed file 111 may be optimal in terms of reconstructed size but may add complexity to the server in the download process.

Figure 12 shows the contents of the original file 101 with the to-be-skipped media data. More specifically, Figure 12 shows the user data 102 with accompanying information, such as, for example, the size 30 and atom tag 33, audio data 105 with accompanying size 30 and atom tag 33, to be skipped audio data 112 with accompanying size 30 and atom tag 33, video data 114 with accompanying size 30 and atom tag 33, and meta-data 116 with accompanying size 30 and atom tag 33.

Figure 12 further illustrate the contents of the movie atom 118. The skipped media track 123 is shown in Figure 12. The table 117 within the ChunkOffset Atom of the track 125 following the skipped track 123 may be updated based on the size 30 of the skipped audio data 112. The process may be more complex if the track to be skipped has media that may be located closer to a beginning of the file. In such a case, the tables may be updated in the remaining tracks.

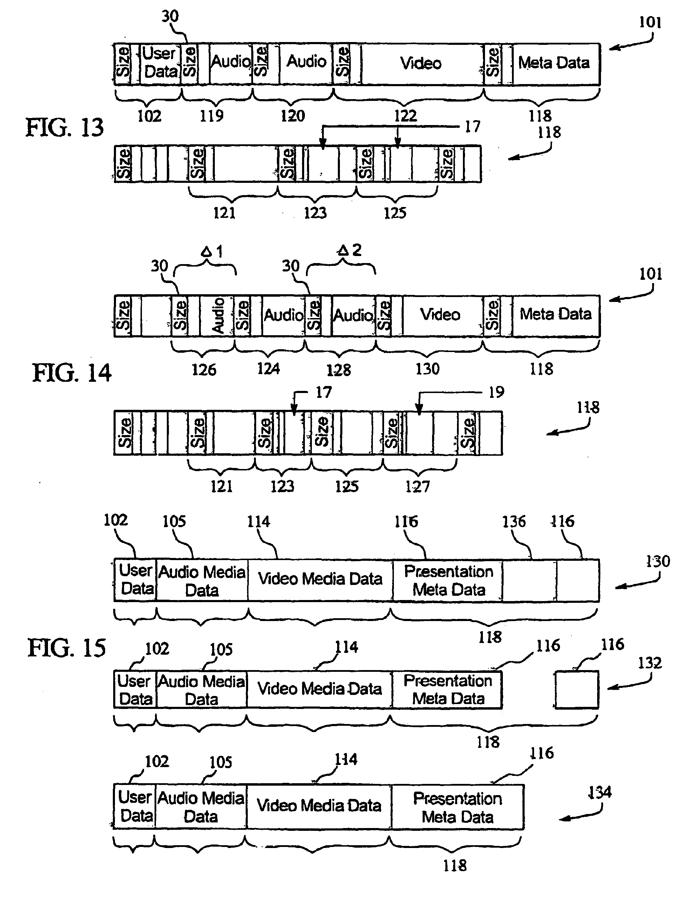

Figure 13 shows the contents of the original file 101 with the to-be-ski,pped media data 119. In this case, the skipped media data 119 occurs before any other media content in the file, namely audio data 120 and video data 122. Accordingly, all the other media tracks may need to be updated. The bottom of Figure 13 shows the contents of the movie atom 118 including the skipped media track 121. The tables 17 within the ChunkOffset Atoms within the remaining tracks, namely audio track 123 and video track 125, may be updated based on the size 30 of the skipped media data 119.

Next, the process may be more complex if several tracks whose media data are not contiguous in the original file are deleted. Figure 14 shows the contents of the original file 101 with the to-be skipped media data. In this case, the skipped media may be within two separate media data atoms, the audio media data 126 and the audio media data 128. Figure 14 also illustrates contents of the movie atom 118. The tables 17 and 19 within the ChunkOffset Atoms must be updated based on the size 30 of each of the skipped media that occurs before the media data of the specific track. For the audio track 123, the offset stable 17 may be updated based on the value Δ1. For the video track 127, the offset table 19 may be updated based on the values Δ1 and Δ2. Thus, a tradeoff may become an increase in complexity of the server to modify content before downloading versus a reduction in file size at the user device after download.

For local playback of MP4 content, a playback user device may not need certain components that may be present in an MP4 file. Therefore, when downloading MP4 files, transmitting those portions of the MP4 file that are necessary for playback may be necessary. The remaining unnecessary components may be dropped, i.e. not transmitted.

Referring to Figure 15, hint tracks 136 within an MP4 file 130 may be omitted when transmitting MP4 content via download. As illustrated in Figure 15, the following steps may be needed to skip the hint track 136: (1) parse file to find top-level atoms, more precisely movie atom 118; (2) parse movie atom to find hint track(s) 136; (3) modify size field of movie atom based on hint track size; and (4) skip hint track(s) when downloading.

Figure 15 further illustrates the original MP4 content 130 before download. Figure 15 shows the actual content 132 that may be transmitted during the download process. Figure 15 further shows the reconstructed MP4 file 134 after download with the hint tracks 136 removed.

Figure 15 depicts data of the hint track 136 contained within a sample description atom within the hint track 136. Thus, removal of the hint track 136 may affect the movie atom 118. However, the hint data of the hint track 136 may be stored as any other media stream within a media data atom. If the hint data of the hint track 136 is stored as any other media stream within the media data atom, the hint track 136 may be removed in a similar manner as the audio track was removed as described above. To remove the hint tracks 136 in the manner as the audio track was removed, two additional steps in the above enumeration may be needed: (5) the skipped track may be associated to a media data atom; and (6) either a skip atom may be substituted in place of a media data atom for skipped media tracks or the skipped media may not sent at all. In the case of the skipped media not being sent at all, offsets may need adjustment in the file based on size of the skipped media.

Further, signalling to the user device what form of downloading may be possible may be through a RTSP DESCRIBE response from the server to the user device. Alternatively, signalling to the user device what form of downloading may be possible may be through requesting information from a content management service. Requesting informations from a content management service may be in the form of a response to a RTSP DESCRIBE request.

Various levels of complexity may be provided in a download server ranging from simple HTTP file download through intelligent, track-selectable, restartable download. The availability of these different download capabilities may occur in sets (i.e. a server may support both restartable download with track selection). The following is a description of simple download only, restartable download, track selection, file compression, early playback, and signalling capabilities.

Simple download is a straightforward download mechanism and may be achieved by a non-PV MP4-unaware web server. A link to an MP4 file may be placed on a web page, and the user device may use HTTP to request the file.

Restartable download is the next level of complexity and adds the ability to restart the download process where the download process stopped should the HTTP connection get dropped. Restarting the download process where the download process stopped cannot be done with a simple web server alone. However, restarting the download process were the download process stopped may be done with a web server with the added support of a remotely controlled process that is controlling the actual download process, such as, for example, a Java servlet.

For certain content that contains multiple media traces, a user device may download a subset of the available content. Care must be taken in the reconstruction of both the media and meta-data after received by the user device.

When downloading an MP4 file, all of the contents may not be needed by the user device. For example, hint tracks may be removed. Unselected media data and meta-data tracks may also be removed. The reconstructed file at the user device is then a subset of the original content of the MP4 file.

Based on the arrangement of the data that may be downloaded, playback by the user device may begin before the entire file is downloaded. Transmitting the capabilities of playback to the user device before the entire file is downloaded may be accomplished in at least two different manners. First, capabilities may be transmitted from the server to the user device based on what the actual server supports and what the content, allows. Second, capabilities may be transmitted from the user device to the server based on what the user device may handle.

In an embodiment of the present invention, an interrupted transfer may be resumed without re-sending previously transmitted data. A discussion of the requirement for each downloaded file component to have an associated identifier to be able to restart a broken download session and the details on the actual HTTP syntax used in initiating and restarting a download session follows.

A goal of the present invention is the ability to restart a download session that was previously interrupted. To restart a download session that was previously interrupted, each downloaded component has an associated unique identifier. Each downloaded component has an associated unique identifier so the user device may identify how much of each component was downloaded. In addition, these same identifiers may be provided to the server so the server may tag each download packet appropriately and also so the server may restart download of the desired components when requested. These identifiers may be present in a download session header as well as each download packet.

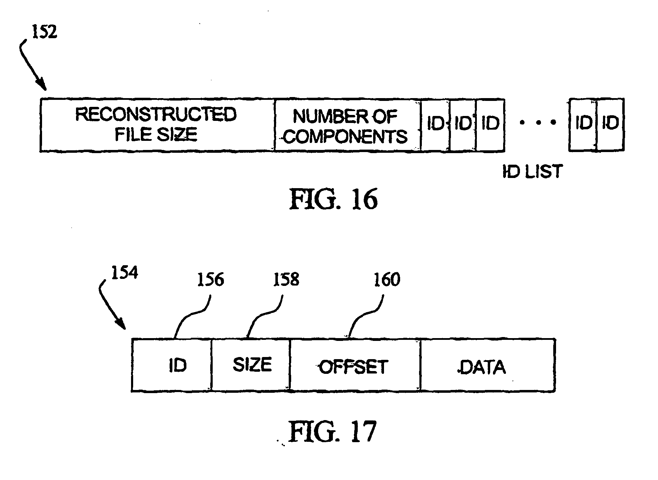

The download session header may contain information pertinent to the overall download session including the size of the reconstructed file after downloading is complete, the number of actual download component, and a list of the unique identifiers for each download component. A logical structure of the download header is shown in Figure 16. The actual structure of the download header is dependent on the transport protocol used.

Figure 16 illustrates the structure of a download session header 152 that may precede chunks of MP4 data. The download session header preceding chunks of MP4 data allows the user device to allocate the space needed for the file. The download session header preceding chunks of MP4 data may also provide a list of all the components that may be downloaded so that the user device may restart a broken download session.

Each download packet corresponds to a portion of a single component of the original file (i.e. a piece of an mat atom). Each download packet may contain a media header containing information pertinent to the specific piece of data being downloaded including the components unique identifier, the size of the data in the current packet, and the offset within the file where this data may be placed. The logical structure of the download packet 154 is shown in Figure 17. The actual structure of the download packet is dependent on the transport protocol used.

Figure 17 shows the header structure that may accompany a chunk of the MP4 file. An ID 156 may be used when restarting a broken download session. Size 158 and offset 160 may be used to reconstruct the download chunks.

To manually select the individual tracks to be downloaded, a similar mechanism as RTSP SETUP may be needed. However, since HTTP has no maintaining state, a track selection and download initialisation may be done in a single step. Track selection and download may be done by a single request that may include a list of all of the selected tracks encapsulated within a single HTTP GET request as shown in the following example:

```
     DESCRIBE
          GET http://foo.org/video/bar.sdp HTTP/1.0
          Accept: application/SDP (text/plain)
 
     Response
          HTTP/1.0 200 OK
          Content-type: application/SDP
          Content-length: XXX
 
          <SDP Data>
 
     DOWNLOAD
          GET http://foo.org/video/bar.mp4/DOWNLOAD HTTP/1.0
          Accept: multipart/mixed;boundary=ZZZ
          Track-List: track ID=1;track_ID=3
 
     Response
          HTTP/1.0 200 OK
          File-Size: 56892
          Num-Components: 4
          Download-IDs: udat0000;mdat00120;mdat01200;moov9876
          Content-type: multipart/mixed;boundary=ZZZ
          --ZZZ
          Content-type: application/mp4
          Download-ID: mdat00120
          Download-offset: 240
          Content-length: XXX
 
          <mp4 video file in packetized multi-part MIME messages>
```

**Track-List:** The track list request header indicate the selected tracks. This is a semicolon-separated list of control URLs from the SDP.
**File-Size:** The file size response header indicates the total size of the downloaded file and is used by the user device for disk space allocation.
**Num-Components:** Indicates the number of separate components that are being downloaded in this session.
**Download-IDs:** A semicolon-separated list of identifiers that are assigned to each of the downloaded components. Used for restarting the download process.

The combination of the three attributes above constitutes the logical download session header.
**Download-ID:** The assigned identifier for the specific component that is being transmitted within the multipart message.
**Download-Offset:** The offset within the reconstructed file at which the transmitted data is to be placed.
**Content-Length:** An HTTP response header indicating the length of this piece of downloaded data.

The combination of the three attributes above constitutes the logical download media packet header. Restarting a downloadable session when the session is composed of several individual components is described in the example shown below. The example below shows where the user data atom was fully downloaded, but the various other components were not complete. Like the above initial download HTTP request, this example uses a single HTTP restart request to continue the download process.

```
     Restart DOWNLOAD
           GET http://foo.org/video/bar.mp4/RESTART HTTP/1.0
           Accept: multipart/mixed;boundary=ZZZ
           Track-List: track_ID=1; track_ID=3
           Restart-IDs: mdat00120/850;mdat01200/1458;moov9876/9800
 
     Response
           HTTP/1.0 200 OK
           Content-type: multipart/mixed;boundary=ZZZ
          ZZZ
 
          Content-type: application/mp4
          Download-ID: mdat00120
          Download-Offset: 850
          Content-length: XXX
 
          <mp4 video file in packetized multi-part MIME messages>
```

**Restart-IDs:** A semicolon-separated list of identifier-offset pairs indicating how much of each of the downloaded components has already been received in a previous download session. Each pair is separated by a slash.

No download session header is needed in the HTTP Response since the user device is restarting a previously interrupted session. The User device already knows the reconstructed file size, number of components and all their unique identifiers.

To signal to the user device when playback may begins, the download server inserts an application-specific header in the HTTP response which signals the user device that playback may begin. Playback may begin after this packet has been reassembled into the file as illustrated by the following multipart MIME message.

```
          --ZZZ
          Content-type: application/mp4
          Download-ID: moov85120
          Download-Offset: 98360
          Begin-Playback: NOW
          Content-length: XXX
 
          <multi-part MIME message for chunk of MP4 file>
```

- **Begin-Playback:**: This HTTP header attribute line indicates that the user device can begin playback of the downloading file according to the included parameter. The following parameter are currently defined:
- **NOW**: Indicates that playback may start immediately
- **<XX>s**: Indicates that playback may start in <XX> seconds

In another embodiment of the present invention, the above described restarting of a downloadable session may be further simplified. The user device may no longer need to keep track of the various component IDs when downloading. Rather, the server may simply transfer chunks of the various components with only the size and offset values in the header. Thus, the user device need only be able to reconstruct the file. In addition, the server may periodically communicate to the user device how much data has been downloaded in therms of NPT normal playback time. Thus, when an interrupted session is restarted, the user device may simply communicate to the server the last time value received from the server. The server may not require any information about the various -component IDs, etc. A sample session of this scenario follows:

```
     DESCRIBE
          GET http://foo.org/video/bar.sdp HTTP/1.0
          Accept: application/sdp (text/plain)
 
     Response
          HTTP/1.0 200 OK
          Content-type: application/sdp
          Content-length: XXX
 
      <SDP Data>
 
     DOWNLOAD
          GET http://foo.org/video/bar.mp4 HTTP/1.0
          Accept: multipart/mixed;boundary=ZZZ
          Track-List: track_ID=1;track_ID=3
 
    Response
        HTTP/1.1 206 Partial Content
        Content-Length: 56892
        Content-Type: multipart/byteranges; boundary=ZZZ
 
        --ZZZ
        Content-Type: application/x-mp4; playbackTime=0
        Content-Range: bytes 240-1439/56892
 
        <MP4 file chunk>
        --ZZZ
        Content-Type: application/x-mp4; playbackTime=1000
        Content-Range: bytes 240-1439/56892
 
         <MP4 file chunk>
         --ZZZ
        Content-Type: application/x-mp4; playbackTime-2000
        Content-Range: bytes 1440-2823/56892
 
        <MP4 file chunk>
        --ZZZ
        Content-Type: application/x-mp4; playbackTime=3000
        Content-Range: bytes 2824-4844/56892
 
        <MP4 file chunk>
        --ZZZB
```

- **Content-Length:**: Indicates the overall length of the downloaded file. This replaces the previous "File-Size" header attribute.
- **Content-Type:**: Indicates the experimental "x-mp4" type indicating our component chunks of an overall MP4 file. The new attribute "playbackTime" is used to signal how much media in NPT normal play time has been downloaded.
- **Content-Range:**: Indicates the start and ending offsets within the file where the chunks are to be placed in the reconstructed file as well as the overall file size.

When the download session is restarted, the following scenario may be used. This following example shows a restart of the download session at '5000ms.

```
     DOWNLOAD
          GET http://foo.org/video/bar.mp4 HTTP/1.0
          Accept: multipart/mixed;boundary=ZZZ
          Range:5000-
          Track-List: track_ID=1;track_ID=3
  
   Response
      HTTP/1.1 206 Partial Content
      Content-Length: 56892
      Content-Type: multipart/byteranges; boundary=ZZZ
 
      --ZZZ
      Content-Type: application/x-mp4; playbackTime=5000
      Content-Range: bytes 240-1439/56892
 
      <MP4 file chunk>
      --ZZZ
      Content-Type: application/x-mp4; playbackTime=6000
      Content-Range: bytes 1440-2823/56892
 
      <MP4 file chunk>
      --ZZZ
      Content-Type: application/x-mp4; playbackTime=7000
      Content-Range: bytes 2824-4844/56892
 
      <MP4 file chunk>
      --ZZZB
```

- **Range:**: Indicates the starting point for the server to resume downloading data from.

It should be understood that various changes and modifications to the presently preferred embodiments described herein will be apparent to those skilled in the art.

## Claims

1. Method for delivery of multimedia content from a server to a user device, wherein the multimedia content comprises a video track and an audio track, the method comprising the steps of:
- generating a request by the user device for multimedia content to be downloaded from an application, the request including information about capabilities of the user device;
- generating a response by the server containing location information for a download module where the by the user device requested multimedia content resides;
- initiating a download session with the download module wherein the download module delivers the requested multimedia content to the user device for playback as a local file in a form that matches the capabilities of the user device;
- transmitting non-sequential portions of the multimedia content from the download module to the user device within a set of data,
- reconstructing the multimedia content by the user device by storing the transferred data in non-contiguous locations within the local file, and the user device begins playback prior to completion of the transfer of the multimedia content;
**characterized in that**
- periodically communicating from the download module to the user device how much data has been downloaded in terms of playback time;
- for resuming the transmission after an interruption without re-sending previously transmitted data, communicating from the user device to the download module the last time value received; and
- determining by the download module the portions to be transmitted, utilizing a size (30) and an offset (32) information attached to each portion.

2. Method according to claim 1, **characterized in that** the method comprises a further step of transmitting the multimedia content in multiple messages, wherein the generated response includes boundary information for the portion being transmitted and time information, wherein the boundary information identifies a position of the portion within the whole multi media content and wherein the time information identifies available playback time of the multi media content that has already been delivered.

3. Method according to claim 1, **characterized in that** the server inserts an application-specific header in the response for signalling to the user device that playback may begin after this portion has been reassembled into the local file or in a defined number of seconds, wherein the header is inserted when
- playback time assembled by the user device is greater than zero; or
- the multimedia content yet to be received by the user device is expected to arrive before the multimedia content is needed for playback.

4. The method according to claim 3, **characterized in that** the method has the further step of monitoring a time played, wherein the user device continues to playback the downloaded content as long as the time played is less than the playback time assembled.

5. Method according to claim 1, **characterized in that** the download module only selects and transmits components necessary for playback depending on the capabilities of the user device, wherein the capability describes a decoder.

## Patentansprüche

1. Verfahren für die Lieferung von Multimedia-Inhalten von einem Server an eine Benutzervorrichtung, wobei der Multimedia-Inhalt eine Videospur und eine Audiospur umfasst, wobei das Verfahren die folgenden Schritte umfasst:
- Erzeugen einer Anforderung, durch die Benutzervorrichtung, für einen von einer Anwendung herunterzuladenden Multimedia-Inhalt, wobei die Anforderung Informationen über die Fähigkeiten der Benutzervorrichtung enthält;
- Erzeugen einer Antwort durch den Server, welche eine Information über die Position eines Download-Moduls, in dem sich der von der Benutzervorrichtung angeforderte Multimedia-Inhalt befindet, enthält;
- Initiieren einer Download-Sitzung mit dem Download-Modul, während welcher das Download-Modul den angeforderten Multimedia-Inhalt an die Benutzervorrichtung für die Wiedergabe als eine lokale Datei in einer Form, welche den Fähigkeiten der Benutzervorrichtung entspricht, liefert;
- Übertragen von nichtsequentiellen Abschnitten des Inhalts von dem Download-Modul an die Benutzervorrichtung mit einem Satz von Daten,
- Wiederherstellen des Multimedia-Inhalts durch die Benutzervorrichtung durch Speichern der übertragenen Daten in nicht benachbarten Positionen innerhalb der lokalen Datei, wobei die Benutzervorrichtung die Wiedergabe vor Beenden der Übertragung des Multimedia-Inhalts beginnt;
**dadurch gekennzeichnet, dass**
- Das Download-Modul der Benutzervorrichtung periodisch mitteilt, welche Datenmenge bezüglich der Abspielzeit heruntergeladen worden ist;
- die Benutzervorrichtung dem Download-Modul den letzten empfangenen Zeitwert mitteilt, um die Übertragung im Anschluss an eine Unterbrechung ohne ein erneutes Senden der davor übertragenen Daten wieder aufzunehmen; und
- das Download-Modul die zu übertragenden Abschnitte unter Verwendung einer jedem Abschnitt angehängten Information über die Größe (30) und die Versetzung (32) bestimmt.

2. Verfahren nach Anspruch 1, **dadurch gekennzeichnet, dass** das Verfahren einen weiteren Schritt des Übertragens des Multimedia-Inhalts in mehrfachen Nachrichten umfasst, wobei die erzeugte Antwort eine Grenzinformation für den momentan übertragenen Abschnitt sowie eine Zeitinformation umfasst, wobei die Grenzinformation eine Position des Abschnitts innerhalb des gesamten Multimedia-Inhalts identifiziert, und wobei die Zeitinformation die verfügbare Abspielzeit des Multimedia-Inhalts, welcher schon geliefert wurde, identifiziert.

3. Verfahren nach Anspruch 1, **dadurch gekennzeichnet, dass** der Server einen anwendungsspezifischen Kopfteil in die Antwort einfügt, um der Benutzervorrichtung zu signalisieren, dass die Wiedergabe, nachdem dieser Abschnitt wieder in der lokalen Datei assembliert wurde oder in einer definierten Anzahl von Sekunden, beginnen kann, wobei der Kopfteil eingefügt wird, wenn
- die von der Benutzervorrichtung assembliert Abspielzeit größer als Null ist; oder
- die Ankunft des an der Benutzervorrichtung noch zu empfangenden Multimedia-Inhalts erwartet wird, bevor der Multimedia-Inhalt für die Wiedergabe benötigt wird.

4. Das Verfahren nach Anspruch 3, **dadurch gekennzeichnet, dass** das Verfahren den weiteren Schritt des Überwachens einer abgespielten Zeit umfasst, wobei die Benutzervorrichtung die Wiedergabe des heruntergeladenen Inhalts fortsetzt, solange die abgespielte Zeit kürzer ist als die assemblierte Abspielzeit.

5. Verfahren nach Anspruch 1, **dadurch gekennzeichnet, dass** das Download-Modul nur die für die Wiedergabe erforderlichen Komponenten in Abhängigkeit von den Fähigkeiten der Benutzervorrichtung auswählt und überträgt, wobei die Fähigkeit einen Decoder darstellt.

## Revendications

1. Procédé de distribution de contenu multimédia entre un serveur et un terminal d'utilisateur, dans lequel le contenu multimédia comprend une piste vidéo et une piste audio, le procédé comprenant les étapes suivantes :
- génération d'une demande par le terminal d'utilisateur pour le contenu multimédia à télécharger à partir d'une application, la demande comprenant des informations relatives aux capacités du terminal d'utilisateur ;
- génération par le serveur d'une réponse contenant des informations d'emplacement pour un module de téléchargement dans lequel se situe le contenu multimédia demandé par le terminal d'utilisateur ;
- initiation d'une session de téléchargement avec le module de téléchargement dans lequel le module de téléchargement distribue le contenu multimédia demandé au terminal d'utilisateur pour le lire en tant que fichier local sous une forme correspondant aux capacités du terminal d'utilisateur ;
- transmission de parties non séquentielles du contenu depuis le module de téléchargement vers le terminal d'utilisateur avec un ensemble de données,
- reconstruction du contenu multimédia par le terminal d'utilisateur en stockant les données transférées dans des emplacements non contigus à l'intérieur du ficher local, dans lequel le terminal d'utilisateur démarre la lecture avant la fin du transfert du contenu multimédia.
**caractérisé en ce que**
- le module de téléchargement communique régulièrement au terminal d'utilisateur la quantité de données téléchargée en termes de temps de lecture ;
- pour reprendre la transmission après une interruption sans renvoyer les données précédemment transmises, communication entre le terminal d'utilisateur et le module de téléchargement de la dernière valeur temporelle reçue ; et
- détermination par le module de téléchargement des parties à transmettre, en utilisant des informations relatives à la taille (30) et au décalage (32) jointes à chaque partie.

2. Procédé selon la revendication 1, **caractérisé en ce que** le procédé comprend une étape supplémentaire de transmission du contenu multimédia dans des messages multiples, dans lequel la réponse générée comprend des informations de limite pour la partie transmise et des informations temporelles, dans lequel les informations de limite identifient la position de la partie au sein de l'ensemble du contenu multimédia et dans lequel les informations temporelles identifient le temps de lecture disponible du contenu multimédia ayant déjà été distribué.

3. Procédé selon la revendication 1, **caractérisé en ce que** le serveur insère dans la réponse un en-tête spécifique à l'application pour signaler au terminal d'utilisateur que la lecture peut démarrer après le réassemblage de cette partie dans le fichier local ou dans un nombre défini de secondes, dans lequel l'en-tête est inséré lorsque
- le temps de lecture assemblé par le terminal d'utilisateur est supérieur à zéro ; ou
- le contenu multimédia à recevoir par le terminal d'utilisateur est prévu pour arriver avant que le contenu multimédia ne soit exigé pour lecture.

4. Procédé selon la revendication 3, **caractérisé en ce que** le procédé comprend l'étape supplémentaire de surveillance d'un temps de lecture, dans lequel le terminal d'utilisateur continue à lire le contenu téléchargé tant que le temps lu est inférieur au temps de lecture assemblé.

5. Procédé selon la revendication 1, **caractérisé en ce que** le module de téléchargement choisit et transmet uniquement les composants nécessaires à la lecture en fonction des capacités du terminal d'utilisateur, dans lequel la capacité représente un décodeur.
